# EUROPÄISCHE PATENTANMELDUNG

(11) **EP 3 671 085 A1**
(43) Veröffentlichungstag der Anmeldung: **24.06.2020**
(21) Anmeldenummer: 18020643.5
(22) Anmeldetag: 18.12.2018
(51) Int. Cl.: F25J 3/04, F24D 10/00, F04D 29/58

(54) **ANORDNUNG UND VERFAHREN ZUM RÜCKGEWINNEN VON VERDICHTUNGSWÄRME AUS LUFT, DIE IN EINER LUFTBEARBEITUNGSANLAGE VERDICHTET UND BEARBEITET WIRD**

(71) Anmelder: Linde GmbH, 82049 Pullach (DE)
(72) Erfinder: Golubev, Dimitri, 82538 Geretsried (DE)
(74) Vertreter: Imhof, Dietmar

(57) **Zusammenfassung**

Es wird eine Anordnung (100) zum Rückgewinnen von Verdichtungswärme aus Luft, die in einer Luftbearbeitungsanlage (10) verdichtet und weiter bearbeitet wird, vorgeschlagen, wobei die Anordnung die Luftbearbeitungsanlage (10) und ein Fernwärmenetz (40) umfasst, wobei die Luftbearbeitungsanlage (10) einen Hauptluftverdichter (11) mit mehreren Verdichterstufen (111-115) und einen oder mehrere weitere Verdichter (12, 13) aufweist, wobei den Verdichterstufen (111-115) des Hauptluftverdichters (11) und dem oder den weiteren Verdichtern (12, 13) jeweils Kühler (116-120; 15, 16) nachgeordnet sind, und wobei die Anordnung dafür eingerichtet ist, unter Verwendung eines ersten Anteils der Kühler (116-120) Rücklaufwasser aus dem Fernwärmenetz (40) in Form eines oder mehrerer erster Rücklaufwasserteilströme direkt oder über einen oder mehrere zwischengeschaltete Kältekreisläufe und ohne Verwendung einer zwischengeschalteten Wärmepumpe (30) zu erwärmen. Die Anordnung (100) weist eine Wärmepumpe (30) mit einem oder mehreren ersten Wärmetauschern (31) und einem oder mehreren zweiten Wärmetauschern (32) auf, wobei der eine oder die mehreren ersten Wärmetauscher (31) in einen Kältemittelkreislauf eingebunden ist oder sind, in dem ein zweiter Anteil der Kühler (15, 16, 18) angeordnet ist, und wobei die Anordnung (100) dafür eingerichtet ist, unter Verwendung des einen oder der mehreren zweiten Wärmetauscher (32) weiteres Rücklaufwasser aus dem Fernwärmenetz (40) in Form eines oder mehrerer zweiter Rücklaufwasserteilströme zu erwärmen. Ein entsprechendes Verfahren ist ebenfalls Gegenstand der Erfindung.

## Beschreibung

Die vorliegende Erfindung betrifft eine Anordnung zum Rückgewinnen von Verdichtungswärme aus Luft, die in einer Luftbearbeitungsanlage, insbesondere einer Luftzerlegungsanlage, verdichtet und bearbeitet wird, sowie ein Verfahren, das unter Verwendung einer entsprechenden Anordnung durchgeführt wird.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand, also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein.

Die Destillationssäulen der genannten Destillationssäulensysteme werden auf unterschiedlichen Druckniveaus betrieben. Bekannte Doppelsäulensysteme weisen eine sogenannte Hochdrucksäule (auch als Drucksäule, Mitteldrucksäule oder untere Säule bezeichnet) und eine sogenannte Niederdrucksäule (auch als obere Säule bezeichnet) auf. Die Hochdrucksäule wird typischerweise auf einem Druckniveau von 4 bis 7 bar, insbesondere ca. 5,3 bar, betrieben. Die Niederdrucksäule wird auf einem Druckniveau von typischerweise 1 bis 2 bar, insbesondere ca. 1,4 bar, betrieben. In bestimmten Fällen können in der Niederdrucksäule auch höhere Druckniveaus eingesetzt werden. Bei den hier und nachfolgend angegebenen Drücken handelt es sich um Absolutdrücke am Kopf der jeweils angegebenen Säulen.

In Luftzerlegungsanlagen wird die zu zerlegende Luft verdichtet, gereinigt und abgekühlt, bevor sie dem Destillationssäulensystem zugeführt wird. Bei der Verdichtung handelt es sich um einen zumindest teilweise bzw. näherungsweise adiabatischen Vorgang. Die bei der Verdichtung verrichtete Verdichtungsarbeit erhöht daher die innere Energie der Luft, so dass deren Temperatur ansteigt. Die zusätzliche innere Energie wird auch Kompressionswärme oder Verdichtungswärme bezeichnet.

Die vorliegend vorgeschlagenen Maßnahmen sind nicht nur in klassischen Luftzerlegungsanlagen von Vorteil, sondern auch in Anlagen, in denen verdichtete Luft lediglich verflüssigt, aber nicht in unterschiedliche Luftfraktionen zerlegt wird. Entsprechende Anlagen (Luftzerlegungsanlagen und reine Luftverflüssigungsanlagen) werden im Folgenden unter dem Begriff "Luftbearbeitungsanlagen" zusammengefasst. Wird spezifisch auf eine Luftzerlegungsanlage Bezug genommen, gelten die entsprechenden Erläuterung jeweils auch für andere Luftbearbeitungsanlagen.

Die in Luftbearbeitungsanlagen eingesetzten Verdichter sind üblicherweise Turboverdichter mit mehreren Verdichtungsstufen, wobei die verdichtete Luft zwischen mehreren oder allen Stufen sowie nach der letzten Stufe gekühlt wird. Die sogenannte Zwischenkühlung wird zur Reduzierung des Energieverbrauchs vorgenommen. In je mehr Stufen die Kompression geteilt ist und je effizienter die Kühlung in den Zwischenkühlern erfolgt, desto besser die Effizienz des Verdichtung insgesamt. Eine Vierstufen-Verdichteranordnung besitzt eine isotherme Effizienz von ca. 70 bis 75%.

Um die Verdichtereffizienz zu maximieren, wird die Zwischenkühlung herkömmlicherweise mit einem Kühlmittel durchgeführt, das (im wirtschaftlich vertretbaren Rahmen) so kalt wie möglich ist. Als Kühlmittel wird üblicherweise Wasser aus einem "offenen" oder "geschlossenen" Kühlkreislauf (mit Kühlung des Wassers gegen Umgebungsluft oder andere Kältequellen wie z.B. See- oder Flusswasser) verwendet. Dieses Kühlmittel besitzt i.d.R. eine Temperatur zwischen 10 und 25 °C vor dem Kühlen der Luft und seine Temperatur wird in den Zwischenkühlern um 5 bis 10 °C erhöht. Entsprechendes gilt für den Kühler stromab der letzten Verdichterstufe. Diese auf einem geringen Temperaturniveau anfallende Wärme kann typischerweise nicht direkt genutzt werden.

Die vorliegende Erfindung stellt sich vor diesem Hintergrund die Aufgabe, eine Anordnung anzugeben, in der die Verdichtungswärme in verbesserter Weise zurückgewonnen und genutzt werden kann.

### Offenbarung der Erfindung

Vor diesem Hintergrund schlägt die vorliegende Erfindung eine Anordnung zum Rückgewinnen von Verdichtungswärme aus Luft, die in einer Luftbearbeitungsanlage, insbesondere einer Luftzerlegungsanlage, verdichtet und bearbeitet wird, sowie ein entsprechendes Verfahren mit den Merkmalen der unabhängigen Patentansprüche vor. Vorteilhafte Ausgestaltungen sind Gegenstand der abhängigen Patentansprüche sowie der nachfolgenden Beschreibung.

Wenngleich die nachfolgende Beschreibung überwiegend auf eine erfindungsgemäße Anordnung und ihre entsprechenden vorteilhaften Ausgestaltungen Bezug nimmt, gelten die jeweiligen Erläuterungen für ein erfindungsgemäßes Verfahren in gleicher Weise. Sämtliche Verfahrensschritte eines entsprechenden Verfahrens können dabei in der beschriebenen Anordnung vorrichtungsmäßig implementiert sein und umgekehrt. Auf eine wiederholte Erläuterung wird lediglich der Übersichtlichkeit halber verzichtet.

Die vorliegende Anmeldung verwendet zur Charakterisierung von Temperaturen und Temperaturbereichen den Begriff des "Temperaturniveaus", wodurch zum Ausdruck gebracht werden soll, dass entsprechende Temperaturen nicht in Form eines exakten Temperaturwerts verwendet werden müssen. Jedoch bewegen sich entsprechende Temperaturen typischerweise in bestimmten Bereichen, die beispielsweise ± 1%, 5%, 10% oder 20% um einen Mittelwert liegen. Unterschiedliche Temperaturniveaus können dabei in disjunkten Bereichen liegen oder in Bereichen, die einander überlappen. Insbesondere schließen beispielsweise Temperaturniveaus unvermeidliche oder zu erwartende Temperaturverluste ein.

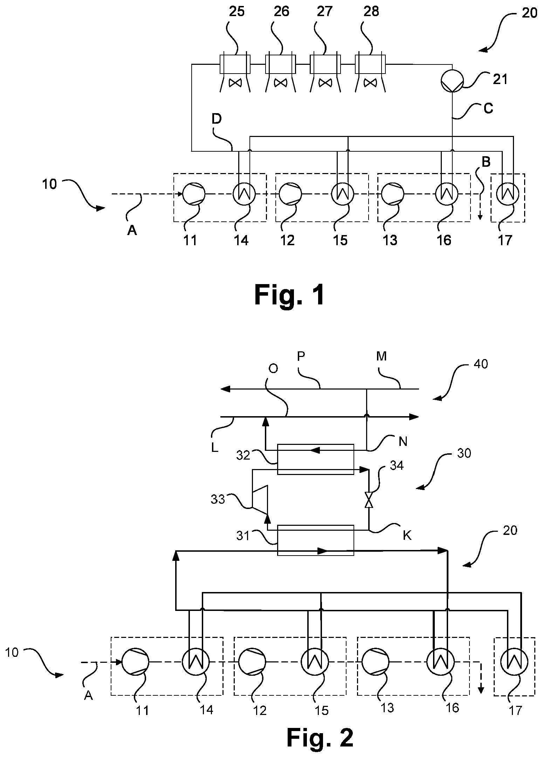

Wie unter Bezugnahme auf die beigefügte Figur 1 unten erläutert, kann Verdichtungswärme aus Luft, die in einer Luftbearbeitungsanlage verdichtet und bearbeitet wird, mittels geeigneter Kühler lediglich abgeführt werden, wobei beispielsweise Wasser als Kühlmittel eingesetzt wird, das anschließend mittels Luftkühlern und eines Rückkühlwerks abgekühlt wird. Die Verdichtungswärme geht dort verloren. Wie unter Bezugnahme auf Figur 2 unten erläutert, könnte unter Einsatz einer Wärmepumpe grundsätzlich eine entsprechende Anordnung geschaffen werden, die nicht nur zum Abführen von Verdichtungswärme, sondern auch zu deren Rückgewinnung dient.

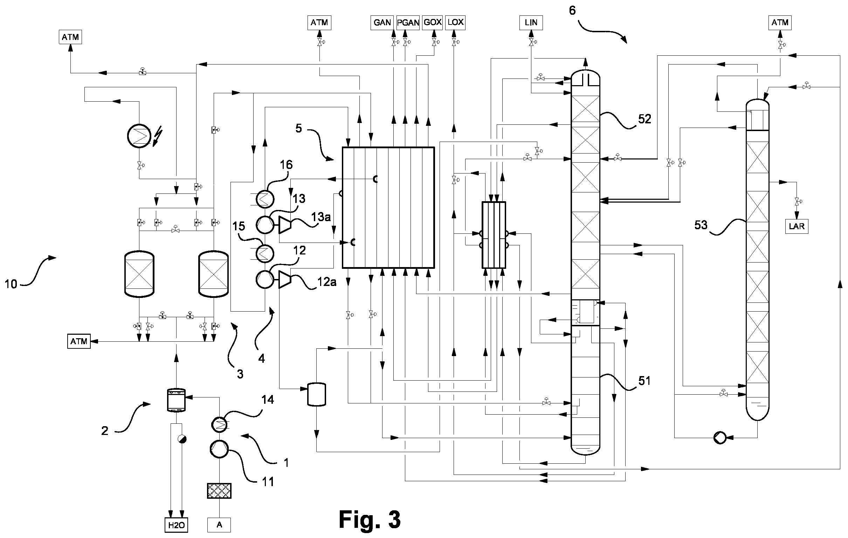

Die vorliegende Erfindung soll nun insbesondere in einer Luftbearbeitungsanlage zum Einsatz kommen, wie sie in Form eines Ausführungsbeispiels in Figur 3 veranschaulicht ist. Die sich im Rahmen der vorliegenden Erfindung stellende technische Aufgabe besteht dabei darin, soviel Wärme wie möglich auf einem Temperaturniveau von ca. 80 °C mit minimalem Aufwand an Investitions- und Betriebskosten in ein Fernwärmenetz zu liefern. In dem Fernwärmenetz wird die Wärme auf diesem Temperaturniveau benötigt.

Die vorliegende Erfindung beruht dabei insbesondere auf der Erkenntnis, dass die unter Bezugnahme auf die Figur 2 beschriebenen bzw. dargestellten Konzepte einen relativ großen Nachteil aufweisen. Dieser besteht darin, dass ein Teil der Wärme aus dem Temperaturbereich zwischen Umgebungstemperatur und ca. 80 °C praktisch einmal zu viel produziert wird. Es handelt sich dabei um die Wärme zwischen ca. 10 bis 25 °C und 50 °C. Das anzuwärmende Wasser in Form des Rücklaufstroms des Fernwärmenetzes weist, wie in den Erläuterungen zu Figur 2 erwähnt, ein Temperaturniveau von ca. 50 °C auf. Das Kühlwasser vom Eintritt in den Verdichter besitzt aber nur 10 bis 25 °C (je nach Umgebungsbedingungen und Auslegung vom Rückkühlwerk bzw. Wärmepumpe). Die in Form von elektrischer Energie am Verdichter aufgenommene Leistung wird daher (in Form von Abwärme) auch in diesem Temperaturbereich und auch bei möglichen Szenarien mit höheren Austrittstemperaturen des Kühlwassers, mittels der Wärmepumpe "hochgepumpt". Dies kostet Energie, da der Wärmepumpenkreislauf hierdurch zusätzlich belastet wird.

Im Rahmen der vorliegenden Erfindung wird daher vorgeschlagen, Rücklaufwasser aus einem entsprechenden Fernwärmenetz teilweise direkt oder indirekt, jedoch jeweils ohne zwischengeschalteten Wärmepumpenkreislauf, zur Kühlung in einem Teil der verwendeten Kühler einzusetzen, jedoch zusätzlich für andere der verwendeten Kühler einen Wärmepumpenkreislauf oder in alternativen Ausgestaltungen einen separaten, mittels eines Rückkühlwerks gekühlten Kühlkreislauf bereitzustellen.

Die vorliegende Erfindung schlägt dazu eine Anordnung zum Rückgewinnen von Verdichtungswärme aus Luft vor, die in einer Luftbearbeitungsanlage verdichtet und bearbeitet wird, wobei die Anordnung die Luftbearbeitungsanlage und ein Fernwärmenetz umfasst, wobei die Luftbearbeitungsanlage einen Hauptluftverdichter mit mehreren Verdichterstufen und einen oder mehrere weitere Verdichter aufweist, wobei den Verdichterstufen des Hauptluftverdichters und dem oder den weiteren Verdichtern jeweils Kühler nachgeordnet sind, und wobei die Anordnung dafür eingerichtet ist, Rücklaufwasser aus dem Fernwärmenetz in Form eines oder mehrerer erster Rücklaufwasserteilströme ohne einen zwischengeschalteten Wärmepumpenkreislauf direkt oder indirekt, d.h. ohne oder mit einem zwischengeschalteten Kältemittelkreislauf, zur Kühlung in einem ersten Anteil der Kühler zu verwenden und dabei entsprechend zu erwärmen.

Erfindungsgemäß ist eine Wärmepumpe mit einem oder mehreren ersten Wärmetauschern bereitgestellt, wobei der eine oder die mehreren ersten Wärmetauscher in einen Kältemittelkreislauf eingebunden ist oder sind, in dem ein zweiter Anteil der Kühler angeordnet ist, wobei die Anordnung dafür eingerichtet ist, unter Verwendung des einen oder mehreren zweiten Wärmetauscher weiteres Rücklaufwasser aus dem Fernwärmenetz in Form eines oder mehrerer zweiter Rücklaufwasserteilströme zu erwärmen. Alternativ kann auch ein separater Kühlkreislauf bereitgestellt sein, in dem der zweite Anteil der Kühler angeordnet ist, und der mittels eines Rückkühlwerks kühlbar ist.

Ein "Hauptluftverdichter" zeichnet sich dadurch aus, dass durch ihn die gesamte, der Luftbearbeitungsanlage zugeführte und dort bearbeitete Luft verdichtet wird. Hingegen wird in dem oder den "weiteren Verdichtern" nur jeweils ein Anteil dieser bereits zuvor im Hauptluftverdichter verdichteten Luft weiter verdichtet.

Ein "Wärmetauscher" zum Einsatz im Rahmen der vorliegenden Erfindung kann in fachüblicher Art ausgebildet sein. Er dient zur indirekten Übertragung von Wärme zwischen zumindest zwei z.B. im Gegenstrom zueinander geführten Fluidströmen, beispielsweise einem warmen Druckluftstrom und einem oder mehreren kalten Fluidströmen oder einem tiefkalten flüssigen Luftprodukt und einem oder mehreren warmen Fluidströmen, bzw. hier zwischen verdichteter Luft und Rücklaufwasser. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken. Es handelt sich beispielsweise um einen Plattenwärmetauscher (engl. Plate Fin Heat Exchanger). Ein derartiger Wärmetauscher weist "Passagen" auf, die als voneinander getrennte Fluidkanäle mit Wärmeaustauschflächen ausgebildet und parallel und durch andere Passagen getrennt zu "Passagengruppen" zusammengeschlossen sind. Kennzeichen eines Wärmetauschers ist, dass in ihm zu einem Zeitpunkt Wärme zwischen zwei mobilen Medien ausgetauscht wird, nämlich wenigstens einem abzukühlenden und wenigstens einem zu erwärmenden Fluidstrom.

Der erste Anteil der Kühler kann insbesondere die Kühler, oder einen Teil davon, umfassen, die den Verdichterstufen des Hauptluftverdichters nachgeschaltet sind. Der zweite Anteil der Kühler kann insbesondere zumindest einen Teil der übrigen Kühler umfassen, wobei unter einem "Anteil" der Kühler auch ggf. lediglich ein Kühler verstanden wird. Der zweite Anteil kann insbesondere auch einen Kühler umfassen, der beispielsweise einer Booster-Stufe einer Kreislaufturbine in einem HAP-Verfahren (siehe unten) zugeordnet ist. Im Rahmen der vorliegenden Erfindung wird insbesondere der erste Anteil der Kühler direkt mit Rücklaufwasser des Fernwärmenetzes, d.h. mit dem einen oder den mehreren ersten Rücklaufwasserteilströmen, betrieben, wobei hier unter einem "direkten" Betrieb verstanden wird, dass das Rücklaufwasser und entsprechende Luftanteile in demselben Wärmetauscher, insbesondere lediglich durch eine Wärmetauschfläche voneinander getrennt, einem Wärmetausch unterworfen werden. Es kann jedoch auch eine Wärmeübertragung über einen Zwischenkreislauf erfolgen. In diesem Fall wird ein Zwischenkreislauf mit einem geeigneten Kältemittel bereitgestellt, das jedoch im Fall des ersten Anteils der Kühler nicht mit einer Wärmepumpe zyklisch auf unterschiedliche Druckniveaus und ggf. Aggregatzustände gebracht wird.

Im Rahmen der vorliegenden Erfindung können zum Betrieb des zweiten Anteils der Kühler sämtliche aus dem Stand der Technik bekannte Wärmepumpen zum Einsatz kommen. Ein oder mehrere Kältemittel (auch als Arbeitsmittel bezeichnet) in einem Kältemittelkreislauf einer klassischen Wärmepumpe werden auf einem unteren Druckniveau in einem Wärmetauscher verdampft. Das oder die Kältemittel wird oder werden sodann mittels eines oder mehrerer Verdichter auf ein oberes Druckniveau verdichtet. Anschließend wird oder werden das oder die Kältemittel auf dem oberen Druckniveau kondensiert, indem Wärme in einem weiteren Wärmetauscher abgeführt wird. Nach dieser Wärmeübertragung, wird oder werden das oder die Kältemittel wieder auf das untere Druckniveau entspannt und erreicht oder erreichen auf diese Weise wieder den Ausgangszustand. Zur abweichenden Funktion von Sorptionswärmepumpen, die im Rahmen der vorliegenden Erfindung ebenfalls eingesetzt werden können, wird auf Fachliteratur verwiesen. Ein Rückkühlwerk, das im Rahmen der Erfindung eingesetzt werden kann, kann insbesondere einen Kühlturm umfassen oder als solcher ausgebildet sein.

Durch die erfindungsgemäß vorgeschlagenen Maßnahmen können sich durch die Verwendung des Rücklaufwassers anstelle von (kälterem) Kühlwasser erhöhte Ansaugtemperaturen an den betroffenen Verdichtern bzw. Verdichterstufen ergeben. Dies erhöht zwar die elektrische Leistungsaufnahme am Verdichter (beispielsweise ca. 7% mehr gegenüber einer Lösung mit Kühlwasser auf ca. 21 °C unter den gleichen Randbedingungen); da die Wärme aber nicht verloren geht, ist dies nicht als Nachteil zu betrachten. Im Rahmen der vorliegenden Erfindung kann die Abwärme der jeweils entsprechend gekühlten Verdichter bzw. Verdichterstufen direkt an das Wasser aus dem Fernwärmenetz übertragen werden, und zwar ohne "Zwischenabkühlung". Es kann jedoch in bestimmten Fällen auch eine Übertragung über einen Zwischenkreislauf erfolgen. Die Auslegung der Zwischenkühler erfolgt dabei vorteilhafterweise derart, dass die thermodynamischen Verluste bei dieser Übertragung klein gehalten werden. Hierzu können die Kühler mit einer mittleren logarithmischen Temperatur (log MTD) von beispielsweise 10 bis 13 °C ausgelegt werden.

Die (restliche) "Niedertemperatur"-Abwärme, ggf. auch von einem oder mehreren der Kühler aus dem ersten Anteil, beispielsweise von einem zusätzlichen Nachkühler des Hauptluftverdichters bzw. von Turbinenbooster-Nachkühlern, wird im Rahmen der vorliegenden Erfindung gesammelt und mittels eine Wärmepumpe auf ein höheres Temperaturniveau übertragen. Dieser Anteil ist jedoch gegenüber der Abwärme des ersten Anteils der Kühler, insbesondere der Zwischenkühler des Hauptluftverdichters, relativ klein. Die Leistungszahl (COP) der Wärmepumpe ist hoch, da das obere Temperaturniveau spürbar kleiner als bei anderen Optionen bzw. Varianten ausfällt. (Das Wasser am Austritt der Zwischenkühler des Hauptluftverdichters kann beispielsweise mit log MTD = 12,5 K ca. 94 °C aufweisen, d.h. für eine Mischtemperatur von 80°C, einer typischen Wassertemperatur in einem Fernwärmenetz, sollte die Temperatur des anzuwärmenden Wasserstroms am Austritt der Wärmepumpe in einem vorliegend ausgewerteten Fall nur bei ca. 67 °C liegen.)

Die direkte Erwärmung des Rücklaufwassers auf unterschiedliche Temperaturniveaus durch die direkte Erwärmung einerseits und die Erwärmung über die Wärmepumpe andererseits stellt einen besonderen Vorteil der vorliegenden Erfindung dar. Gemäß einer vorteilhaften Ausgestaltung erfolgt eine anschließende Vermischung unter Erhalt einer Mischtemperatur, die einer Vorlaufwassertemperatur entspricht. Es ist jedoch auch eine Variante ohne Vermischung möglich.

Eine erfindungsgemäß ausgestaltete Anordnung ist vorteilhafterweise dafür eingerichtet, den einen oder die mehreren ersten Rücklaufwasserteilströme unter Verwendung des ersten Anteils der Kühler auf ein erstes Temperaturniveau zu erwärmen und den oder die zweiten Rücklaufwasserteilströme unter Verwendung des einen oder der mehreren zweiten Wärmetauscher auf ein zweites Temperaturniveau unterhalb des ersten Temperaturniveaus zu erwärmen. Das erste Temperaturniveau liegt dabei vorteilhafterweise bei 80 bis 110 °C, das zweite Temperaturniveau liegt vorteilhafterweise bei 50 bis 80 °C, und das zweite Temperaturniveau liegt vorteilhafterweise 10 bis 50 K unterhalb des ersten.

Vorteilhafterweise ist die erfindungsgemäß bereitgestellte Anordnung dafür eingerichtet, den einen oder die mehreren ersten Rücklaufwasserteilströme und den einen oder die mehreren zweiten Rücklaufwasserteilströme zu Vorlaufwasser in dem Fernwärmenetz zuzuspeisen. Dabei wird oder werden gemäß einer Ausgestaltung der vorliegenden Erfindung der eine oder die mehreren ersten Rücklaufwasserteilströme auf dem ersten Temperaturniveau und der eine oder die mehreren zweiten Rücklaufwasserteilströme auf dem zweiten Temperaturniveau zu einem Sammelstrom vereinigt und der Sammelstrom wird auf einem sich durch die Vereinigung einstellenden mittleren Temperaturniveau zumindest zu einem Teil dem Vorlaufwasser zugespeist. In einer alternativen Ausgestaltung werden der eine oder die mehreren ersten Rücklaufwasserteilströme und der eine oder die mehreren zweiten Rücklaufwasserteilströme getrennt voneinander dem Vorlaufström zugespeist, wobei sich auch hier im Effekt eine "mittlere" Zuspeistemperatur ergibt, wie sie sich auch bei einer Vereinigung einstellen würde. Das Ermitteln (bzw. Nachweisen) dieses mittleren Temperaturniveaus TM kann dabei aus der Wärmebilanz unter Einbeziehung von gemessenen Werten für die jeweiligen Temperaturen (T1, T2) und Massenströme (M1, M2) gemäß TM = (M1 x T1 + M2 x T2) / (M1 + M2) erfolgen. Auch eine Mischtemperatur, die sich bei einer Vereinigung der Teilströme ergibt, berechnet sich entsprechend.

Für eine Zuspeisung zu dem Vorlaufwasser kann eine entsprechende Anordnung also insbesondere dafür eingerichtet sein, den Sammelstrom durch das Vereinigen des einen mehreren ersten Rücklaufwasserteilströme auf dem ersten Temperaturniveau und des einen oder der mehreren zweiten Rücklaufwasserteilströme auf dem zweiten Temperaturniveau auf einem mittleren Temperaturniveau zu bilden. Ein entsprechendes mittleres Temperaturniveau ergibt sich in der Alternative ohne eine Vereinigung zu einem Sammelstrom, wie erwähnt, aus den jeweiligen Temperaturen (erstes Temperaturniveau und zweites Temperaturniveau) und den Massenströmen. Das Vorlaufwasser kann in diesem Zusammenhang, ungeachtet dessen, ob eine Bildung eines Sammelstroms erfolgt oder nicht, insbesondere auf einem dritten Temperaturniveau bereitgestellt werden, das bei 70 bis 95 °C liegt und das sich um nicht mehr als 5 bis 10 K von dem mittleren Temperaturniveau unterscheidet.

Das geringere zweite Temperaturniveau, auf das der eine oder die mehreren zweiten Rücklaufwasserteilströme gemäß der erläuterten Ausgestaltung der Erfindung unter Einsatz der Wärmepumpe erwärmt wird oder werden, wirkt sich sowohl günstig auf die Effizienz (COP-Wert) als auch auf die Kosten der Wärmepumpe aus. Im Rahmen der vorliegenden Erfindung wurde überraschenderweise erkannt, dass eine derartige Ausgestaltung im Vergleich zu einer Variante mit geringerer direkter Anwärmung des einen oder der mehreren ersten Rücklaufwasserteilströme und stärkerer Anwärmung des einen oder der mehreren zweiten Rücklaufwasserteilströme mit einer Wärmepumpe günstiger ist.

Im Rahmen der vorliegenden Erfindung kann die Anordnung insbesondere dafür eingerichtet sein, weiteres Rücklaufwasser in Form eines oder mehrerer weiterer Rücklaufwasserteilströme bereitzustellen, ohne es unter Verwendung des ersten Anteils der Kühler zu erwärmen und ohne es unter Verwendung des einen oder der mehreren zweiten Wärmetauscher zu erwärmen. Mit anderen Worten kann insbesondere nur ein Teil des entsprechenden Rücklaufwassers in der erläuterten Weise behandelt werden.

Weitere Vorteile der erfindungsgemäß vorgeschlagenen Maßnahmen, die sich bei sämtlichen erläuterten Ausgestaltungen ergeben, bestehen darin, dass die entsprechend gekühlten Verdichterstufen bzw. Verdichter (außer der ersten Stufe) immer die gleichen Ansaugbedingungen "sehen". Ein Betrieb im Auslegungspunkt (d.h. mit bestmöglicher Effizienz) über das ganze Jahr ist damit auch bei schwankenden Kühlwassertemperaturen möglich. Es besteht keine Notwendigkeit zur Behandlung des Kühlwassers (für die Hauptluftverdichter-Zwischenkühler, aber auch für die der anderen Verdichter). Dies führt zu einer Kostenreduktion.

Zur Luftzerlegung können sogenannte Hauptverdichter/Nachverdichter-(Main Air Compressor/Booster Air Compressor-, MAC-BAC-)Verfahren oder sogenannte Hochluftdruck-(High Air Pressure-, HAP-)Verfahren eingesetzt werden. Bei den Hauptverdichter/Nachverdichter-Verfahren handelt es sich um die eher konventionelleren Verfahren, Hochluftdruck-Verfahren kommen zunehmend in jüngerer Zeit als Alternativen zum Einsatz. Die vorliegende Erfindung kann im Zusammenhang mit beiden Varianten der Luftzerlegung eingesetzt werden.

Hauptverdichter/Nachverdichter-Verfahren zeichnen sich dadurch aus, dass nur ein Teil der dem Rektifikationssäulensystem insgesamt zugeführten Einsatzluftmenge auf ein Druckniveau verdichtet wird, das wesentlich, d.h. um mindestens 3, 4, 5, 6, 7, 8, 9 oder 10 bar, oberhalb des Druckniveaus der Hochdrucksäule liegt. Ein weiterer Teil der Einsatzluftmenge wird lediglich auf das Druckniveau der Hochdrucksäule oder ein Druckniveau, das sich um nicht mehr als 1 bis 2 bar von dem Druckniveau der Hochdrucksäule unterscheidet, verdichtet, und auf diesem niedrigeren Druckniveau in die Hochdrucksäule eingespeist. Ein Beispiel für ein Hauptverdichter/Nachverdichter-Verfahren ist bei Häring (s.o.) in Figur 2.3A gezeigt.

Bei einem Hochluftdruck-Verfahren wird hingegen die gesamte dem Rektifikationssäulensystem insgesamt zugeführte Einsatzluftmenge auf ein Druckniveau verdichtet, das wesentlich, d.h. um mindestens 3, 4, 5, 6, 7, 8, 9 oder 10 bar oberhalb des Druckniveaus der Hochdrucksäule liegt. Der Druckunterschied kann beispielsweise bis zu 14, 16, 18 oder 20 bar betragen. Hochluftdruck-Verfahren sind beispielsweise aus der EP 2 980 514 A1 und der EP 2 963 367 A1 bekannt.

Die vorliegende Erfindung kommt insbesondere bei Luftzerlegungsanlagen mit sogenannter Innenverdichtung (IV, Internal Compression, IC) zum Einsatz. Hierbei wird wenigstens ein Produkt, das mittels der Luftzerlegungsanlage bereitgestellt wird, dadurch gebildet, dass dem Rektifikationssäulensystem eine tiefkalte Flüssigkeit entnommen, in flüssigem Zustand einer Druckerhöhung unterworfen, und, je nach dem vorliegenden Druck, durch Erwärmen entweder in den gasförmigen oder in den überkritischen Zustand überführt wird. Beispielsweise kann mittels Innenverdichtung innenverdichteter gasförmiger Sauerstoff (GOX IV, GOX IC), innenverdichteter gasförmiger Stickstoff (GAN IV, GAN IC) oder innenverdichtetes gasförmiges Argon (GAR IV, GAR IC) erzeugt werden. Die Innenverdichtung bietet eine Reihe von technischen Vorteilen gegenüber einer grundsätzlich ebenfalls möglichen externen Verdichtung entsprechender Produkte und ist in der Fachliteratur, beispielsweise bei Häring (s.o.), Abschnitt 2.2.5.2, "Internal Compression", erläutert.

Grundsätzlich eignet sich die vorliegende Erfindung für beliebige Arten von Luftzerlegungsanlagen und ggf. auch für reine Luftverflüssiger.

Die vorliegende Erfindung erstreckt sich, wie erwähnt, auch auf ein Verfahren zum Rückgewinnen von Verdichtungswärme aus Luft, bei dem eine Anordnung verwendet wird, die eine Luftbearbeitungsanlage und ein Fernwärmenetz umfasst, wobei die Luftbearbeitungsanlage einen Hauptluftverdichter mit mehreren Verdichterstufen und einen oder mehrere weitere Verdichter aufweist und den Verdichterstufen des Hauptluftverdichters und dem oder den weiteren Verdichtern jeweils Kühler nachgeordnet sind, wobei die Luft in der Luftbearbeitungsanlage verdichtet und weiter bearbeitet wird und wobei unter Verwendung eines ersten Anteils der Kühler Rücklaufwasser aus dem Fernwärmenetz in Form eines oder mehrerer erster Rücklaufwasserteilströme direkt oder über einen oder mehrere zwischengeschaltete Kältekreisläufe und ohne Verwendung einer zwischengeschalteten Wärmepumpe erwärmt wird oder werden.

Erfindungsgemäß zeichnet sich ein solches Verfahren dadurch aus, dass eine Wärmepumpe mit einem oder mehreren ersten Wärmetauschern und einem oder mehreren zweiten Wärmetauschern verwendet wird, wobei der eine oder die mehreren ersten Wärmetauscher in einen Kältemittelkreislauf eingebunden ist oder sind, in dem ein zweiter Anteil der Kühler angeordnet ist, und wobei unter Verwendung des einen oder der mehreren zweiten Wärmetauscher weiteres Rücklaufwasser aus dem Fernwärmenetz in Form eines oder mehrerer zweiter Rücklaufwasserteilströme erwärmt wird.

Zu Merkmalen und Vorteilen des erfindungsgemäß vorgeschlagenen Verfahrens sei auf die obigen Erläuterungen bezüglich der erfindungsgemäß vorgeschlagenen Anordnung ausdrücklich verwiesen. Insbesondere kann in Ausgestaltungen eines solchen Verfahrens eine Anordnung verwendet werden, wie sie zuvor in unterschiedlichen Ausgestaltungen erläutert wurde.

### Kurze Beschreibung der Zeichnungen

Figur 1 zeigt eine Anordnung, die zum Abführen von Verdichtungswärme aus Luft dient, die in einer Luftbearbeitungsanlage verdichtet und bearbeitet wird.
Figur 2 zeigt eine Anordnung, die zum Rückgewinnen von Verdichtungswärme aus Luft dient, die in einer Luftbearbeitungsanlage verdichtet und bearbeitet wird.
Figur 3 zeigt eine Luftzerlegungsanlage, die in einem Verfahren gemäß einer Ausgestaltung der Erfindung verwendet werden kann.
Figur 4 zeigt eine Anordnung gemäß einer Ausgestaltung der Erfindung.
Figur 5 zeigt eine weitere Anordnung gemäß einer Ausgestaltung der Erfindung.

In den Figuren 1 bis 4 sind Anordnungen veranschaulicht, deren Komponenten zumindest teilweise baulich identisch oder vergleichbar ausgebildet und/oder zu identischen oder vergleichbaren technischen Zwecken bereitgestellt sind. Solche Komponenten sind nachfolgend mit identischen Bezugszeichen angegeben und werden nachfolgend nicht wiederholt erläutert.

### Ausführliche Beschreibung der Zeichnungen

In Figur 1 ist eine Anordnung veranschaulicht, die zum Abführen von Verdichtungswärme aus Luft dient, die in einer Luftbearbeitungsanlage 10 verdichtet und weiter bearbeitet wird. In dieser Anordnung wird ein Luftstrom A von beispielsweise ca. 10 000 m3/h auf einem Druckniveau von beispielsweise ca. 1 bar abs. und einem Temperaturniveau von beispielsweise ca. 8 °C einem Hauptluftverdichter 11 zugeführt. Der Hauptluftverdichter 11 weist mehrere Verdichterstufen auf, die hier jedoch aus Gründen der Übersichtlichkeit nicht veranschaulicht sind. Den weiteren Verdichtern 12 und 13 kann auch nur ein Teil der dem Hauptluftverdichter 11 zugeführten Luft zugeführt werden, oder auch deutlich mehr Luft, beispielsweise wenn diese weiteren Verdichter 12, 13 als Kreislaufverdichter verwendet werden.

Das Druck- und Temperaturniveau der Luft stromauf des Hauptluftverdichters 11 richtet sich nach den jeweiligen Umgebungsbedingungen. Dem Hauptluftverdichter 11 und den weiteren Verdichtern 12 und 13 sind jeweils Kühler 14 bis 16 nachgeordnet. Da der Hauptluftverdichter 11 mehrstufig ausgebildet ist, sind den Verdichterstufen dieses Hauptluftverdichters 11 jeweils entsprechende Kühler nachgeordnet. Der Kühler 14 steht daher hier insbesondere für mehrere Kühler. Die Anordnung ist dafür eingerichtet, den Luftstrom A nacheinander zumindest teilweise durch den Hauptluftverdichter 11 und die weiteren Verdichter 12 und 13 sowie jeweils die Kühler 14 bis 16, die dem Hauptluftverdichter 11 und den weiteren Verdichtern 12 und 13 nachgeordnet sind, zu führen. Der entsprechend verdichtete Luftstrom, nun mit B bezeichnet, wird in der Luftbearbeitungsanlage 10 weiter bearbeitet.

Die Kühler 14 bis 16 werden jeweils mit einem Kühlmittel, insbesondere mit Kühlwasser, betrieben. Dieses wird in dem in Figur 1 veranschaulichten Beispiel in Form eines Kühlmittelstroms C in einem Volumenstrom von beispielsweise ca. 820 m3/h auf einem Druckniveau von beispielsweise ca. 1,65 bar abs. und einem Temperaturniveau von beispielsweise ca. 26,1 °C bereitgestellt. Der Kühlmittelstrom C, beispielsweise Kühlwasser, wird dabei in einer Kühlanordnung 20 mittels einer Kühlmittelpumpe 21 gefördert. Der Kühlmittestrom C wird auf Teilströme aufgeteilt, die jeweils den Kühlern 14 bis 16 zugeführt werden. Ein weiterer Kühler 17 ist vorhanden. Dieser wird ebenfalls mit einem entsprechenden Kühlmittelteilstrom beaufschlagt. Nach der Verwendung in den Kühlern 14 bis 17 wird das Kühlmittel zu einem Sammelstrom D vereinigt, der auf einem Temperaturniveau von beispielsweise ca. 31,7 °C und einem Druckniveau von beispielsweise 2,5 bar abs. vorliegt. Dieser Kühlmittelstrom D wird anschließend einem Rückkühlwerk mit Kühlern 25 bis 28 zugeführt und auf ein Temperaturniveau von beispielsweise ca. 25,9 °C abgekühlt. Auch die Verwendung weiterer, parallel oder seriell angeordneter Kühleinrichtungen ist möglich. Nach der Abkühlung wird der Kühlmittelstrom D der Pumpe 21 zugeführt.

In Figur 2 ist eine weitere Anordnung veranschaulicht, die im Gegensatz zu der in Figur 1 veranschaulichten Anordnung nicht nur zum Abführen von Verdichtungswärme aus Luft dient, die in einer Luftbearbeitungsanlage 10 verdichtet und bearbeitet wird, sondern auch zur Rückgewinnung der Verdichtungswärme eingerichtet ist.

Die in Figur 2 gezeigte Anordnung umfasst ebenfalls eine Kühlanordnung 20, die insbesondere auch eine Pumpe 21 wie die Anordnung gemäß Figur 1 aufweisen kann, welche aber hier nicht gesondert veranschaulicht ist. Anstelle der Kühler 25 bis 28 ist hier jedoch eine Wärmepumpenanordnung 30 mit zwei Wärmetauschern 31, 32, einem Verdichter 33 und einem Entspannungsventil 34 vorgesehen, in der ein Kreislaufstrom K geführt wird. Dieser wird im Kreislauf in dem Verdichter 33 verdichtet, anschließend in dem Wärmetauscher 32 abgekühlt und dabei insbesondere kondensiert, sodann mittels des Entspannungsventils 34 entspannt und dabei insbesondere verdampft, und in dem Wärmetauscher 31 erwärmt, bevor er wieder dem Verdichter 33 zugeführt wird.

Die Verdichtungswärme wird mittels der Wärmepumpenanordnung 30 auf ein Temperaturniveau von etwas über 80 °C "hochgepumpt" und kann auf diese Weise zur Erwärmung von Rücklaufwasser in einem Fernwärmenetz 40 verwendet werden. In dem Fernwärmenetz 40 wird ein Vorlaufstrom L auf einem Temperaturniveau von beispielsweise ca. 80 °C bereitgestellt. Ein Rücklaufstrom M wird von den Verbrauchern auf einem Temperaturniveau von beispielsweise ca. 50 °C zurückgeführt. In der Anordnung der Figur 2 wird nun ein Teilstrom N des Rücklaufstroms M durch den Wärmetauscher 32 geführt und dort auf ein Temperaturniveau von beispielsweise ca. 80 °C erwärmt. Der erwärmte Teilstrom N wird dem Vorlaufstrom L zugespeist, wodurch sich ein Sammelstrom O mit ca. 80 °C ergibt. Der verbleibende Teilstrom P des Rücklaufstroms M wird auf andere Weise einer erneuten Erwärmung unterworfen.

Wenngleich in Figur 2 nicht gesondert veranschaulicht, könnte auch nur die Verdichtungswärme eines Teils der Verdichter 11 bis 13 in der gezeigten Weise ausgekoppelt werden, beispielsweise nur die Verdichtungswärme des Hauptluftverdichters 11 und eines als Kreislaufverdichter ausgebildeten Verdichters 12 auf einem Temperaturniveau von beispielsweise ca. 60 °C. Das Kühlmittel, insbesondere Kühlwasser, für die Verdichter 11 bis 13 wird dabei stets auf beispielsweise ca. 25 °C bzw. eine dem Umgebungszustand angepasste Temperatur abgekühlt.

Die vorliegende Erfindung kann in beliebigen Luftzerlegungsanlagen bzw. Luftbearbeitungsanlagen zum Einsatz kommen, insbesondere dann, wenn in diesen Luft mittels eines Hautptluftverdichters und weiterer Verdichter verdichtet wird. Eine entsprechende Luftzerlegungsanlage ist beispielsweise in Figur 2.3A bei Häring (s.o.) sowie in Figur 3 veranschaulicht. Es versteht sich, dass die Figur 3 nur zur allgemeinen Veranschaulichung möglicher Orte der Luftverdichtung und Abführung der Verdichtungswärme in einer entsprechenden Luftbearbeitungsanlage dient und die Erfindung nicht auf diese spezifische Ausgestaltung beschränkt ist.

Die in Figur 3 beispielhaft gezeigte Luftzerlegungsanlage, die auch hier insgesamt mit 10 bezeichnet ist verfügt unter anderem über eine Hauptluftverdichteranordnung 1 mit einem wie zuvor mit 11 bezeichneten Hauptluftverdichter und mit einem Nachkühler 14, eine Vorkühleinrichtung 2, ein Reinigungssystem 3, eine Nachverdichteranordnung 4 mit wie zuvor mit 12 und 13 bezeichneten Verdichtern und Nachkühlern 15 und 16, einen Hauptwärmetauscher 5 und ein Destillationssäulensystem 6. Das Destillationssäulensystem 6 umfasst im dargestellten Beispiel eine klassische Doppelsäulenanordnung aus einer Hochdrucksäule 51 und einer Niederdrucksäule 52 sowie eine Argonsäule 53. Es kann aber auch beispielsweise auf eine Argongewinnung verzichtet oder eine Kombination aus einer Roh- und einer Reinargonsäule vorgesehen sein.

In der Luftzerlegungsanlage 10 gemäß Figur 3 werden die Verdichter 12 und 13 von Entspannungsturbinen 12a und 13a angetrieben. Diese Verdichter 12 und 13 werden auch als Booster bezeichnet. Die Druckverhältnisse an diesen Verdichtern 12 und 13 sind aufgrund verfahrenstechnischer Gegebenheiten relativ niedrig, so dass auch Luftaustrittstemperatur relativ niedrig ist. Daher kann an dieser Stelle keine direkte oder indirekte Kopplung mit einem Fernwärmenetz ohne Wärmepumpe verwendet werden. Dies wäre außerdem mit gewissen Nachteilen auf der Prozessseite verbunden, da entsprechende Luftströme am Eintritt in den kalten Teil der Luftzerlegungsanlage viel zu warm wären bzw. man weitere Nachkühler einsetzen müsste, um auf ausreichend geringe Temperaturen zu kommen.

In der Luftzerlegungsanlage 10 wird ein Umgebungsluft A in Form eines Einsatzluftstroms mittels des Hauptluftverdichters 11 über ein nicht bezeichnetes Filter angesaugt und verdichtet. Der verdichtete Einsatzluftstrom wird in dem Kühler 14 und der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in mehrere Teilströme aufgeteilt, die in der dargestellten Weise in der in der Nachverdichteranordnung 4 mit den Nachverdichtern 12, 13 nachverdichtet, in dem Hauptwärmetauscher 5 abgekühlt, und in das Destillationssäulensystem 9 eingespeist werden. So wird ein Teil des in den Verdichtern 12 und 13 verdichteten Anteils der Einsatzluft über nicht gesondert bezeichnete Ventile in die Hochdrucksäule 51 eingespeist, ein weiterer Teil wird in der Entspannungsturbine 12a entspannt und anschließend einer Phasentrennung unterworfen. Der gasförmig verbliebene Anteil aus der Phasentrennung wird teilweise im Hauptwärmetauscher 5 erwärmt, in der Entspannungsturbine 13a entspannt, erneut im Hauptwärmetauscher 5 erwärmt und an die Atmosphäre abgegeben. Der gasförmig verbliebene Anteil aus der Phasentrennung wird ferner teilweise in die Hochdrucksäule 51 eingespeist. Der flüssige Anteil aus der Phasentrennung wird in die Niederdrucksäue 51 eingespeist. Zu weiteren Details bezüglich des Betriebs der in Figur 3 veranschaulichten Luftzerlegungsanlage sei auf die zitierte Fachliteratur ausdrücklich verwiesen.

Die vorliegende Erfindung geht insbesondere von der technischen Aufgabe aus, soviel Wärme wie möglich auf einem Temperaturniveau von ca. 80 °C mit minimalem Aufwand an Investitions- und Betriebskosten in ein Fernwärmenetz zu liefern. Wie zuvor erläutert, können hierbei die zuvor erläuterten Konzepte Nachteile aufweisen.

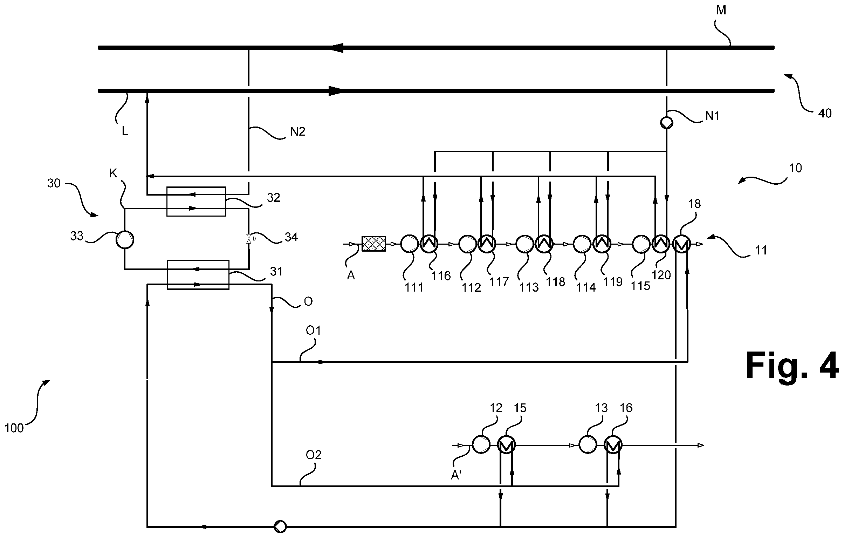

Hierzu wird in der vorliegenden Erfindung in einem Ausführungsbeispiel eine Anordnung 100 vorgeschlagen, wie sie in Figur 4 schematisch veranschaulicht ist. Auch hier wird Luft in einer Luftbearbeitungsanlage 10 verdichtet und bearbeitet, und zwar in Form zweier Luftströme A und A', wobei der Luftstrom A' insbesondere einen Teilstrom des Luftstroms A stromab eines Reinigungssystems darstellt, wie es in einem Beispiel in Figur 3 gezeigt ist. Die Luftbearbeitungsanlage 10 kann beispielsweise wie in Figur 3 veranschaulicht ausgebildet sein. Bei den Verdichtern 12 und 13 kann es sich daher insbesondere um Nachverdichter handeln, die beispielsweise mittels Entspannungsturbinen angetrieben werden, bei dem Verdichter 11 um einen Hauptluftverdichter. In Figur 4 sind dabei individuelle Verdichterstufen 111 bis 115 des Hauptluftverdichters 11 mit den jeweiligen Kühlern 116 bis 120 veranschaulicht.

Die Anordnung 100 umfasst die Luftbearbeitungsanlage 10 und ein Fernwärmenetz 40, wobei die Anordnung dafür eingerichtet ist, durch einen ersten Anteil der Kühler, hier nämlich die Kühler 116 bis 120, die den Verdichterstufen 111 bis 115 des Hauptluftverdichters 11 nachgeordnet sind, Rücklaufwasser aus dem Fernwärmenetz 40 zu führen. Bei diesem Rücklaufwasser handelt es sich um einen Teil des bereits oben mit M bezeichneten Rücklaufstroms, der von Verbrauchern auf einem Temperaturniveau von beispielsweise ca. 50 °C zurückgeführt wird. Ein in der erläuterten Weise verwendeter ("erster") Rücklaufwasserteilstrom ist hier mit N1 bezeichnet. Der erste Rücklaufwasserteilstrom N1 umfasst beispielsweise ca. 88,4 t/h und wird in der veranschaulichten Weise auf ein ("erstes") Temperaturniveau von beispielsweise ca. 94 °C erwärmt.

Ein weiterer Anteil des Rücklaufstroms M mit beispielsweise ca. 98,8 t/h, hier mit N2 bezeichnet, wird in Form eines weiteren ("zweiten") Rücklaufwasserteilstroms durch den zweiten Wärmetauscher 32 der auch hier mit 30 bezeichneten Wärmepumpe 30 geführt und in diesem auf ein ("zweites") Temperaturniveau von beispielsweise ca. 67,4 °C erwärmt. Dieses geringere Temperaturniveau wirkt sich, wie erwähnt, sowohl günstig auf die Effizienz (COP-Wert) als auch auf die Kosten der verwendeten Wärmepumpe aus. Im Rahmen der vorliegenden Erfindung wurde überraschenderweise erkannt, dass eine derartige Ausgestaltung im Vergleich zu einer Variante mit geringerer direkter Anwärmung des ersten Teilstroms und stärkerer Anwärmung des zweiten Teilstroms mit einer Wärmepumpe günstiger ist. Durch Vermischung des zweiten Teilstroms N2 mit dem ersten Teilstrom N1 ergibt sich ein Mischtemperaturniveau von beispielsweise ca. 80 °C des erhaltenen Sammelstroms mit beispielsweise ca. 187,2 t/h.

Die Kühler 15 und 16 sowie ein weiterer Nachkühler 18, der dem Hauptluftverdichter 11 insgesamt nachgeordnet ist, werden mittels zweier Teilströme O1 und O2 eines Kühlmittelstroms O, insbesondere von Kühlwasser, gekühlt. Die Vorlauftemperatur beträgt jeweils beispielsweise ca. 21,4 °C, der Mengenstrom des Teilstroms O1 beispielsweise ca. 42,6 t/h und jener des Teilstroms O2 beispielsweise ca. 87,1 t/h. Die Es ergibt sich eine Rücklauftemperatur von beispielsweise ca. 31,4 °C. In der Wärmepumpe 30 erfolgt in dem ersten Wärmetauscher 31 ein Wärmeübergang von beispielsweise ca. 1 507 kW und in dem zweiten Wärmetauscher 32 ein Wärmeübergang von beispielsweise ca. 1 993 kW, bei einem angenommenen COP-Wert von 4,4. Den angegebenen Werten liegt jeweils die Annahme zugrunde, dass der Luftstrom A in dem Hauptluftverdichter auf ein Druckniveau von beispielsweise ca. 23,1 bar verdichtet wird, und dass in den weiteren Verdichtern 12 und 13 eine Verdichtung auf beispielsweise ca. 45 bar erfolgt.

In der in Figur 4 veranschaulichten Ausgestaltung der Anordnung 100 ist also eine Wärmepumpe 30 mit einem ersten Wärmetauscher 31 und einem zweiten Wärmetauscher 32 bereitgestellt ist, wobei der erste Wärmetauscher 31 in einen Kältemittelkreislauf eingebunden ist, in dem ein zweiter Anteil der Kühler, hier die Kühler 15 und 16 sowie der Kühler 18, angeordnet ist, und wobei die Anordnung 100 dafür eingerichtet ist, durch den zweiten Wärmetauscher 32 weiteres Rücklaufwasser aus dem Fernwärmenetz 40 zu führen.

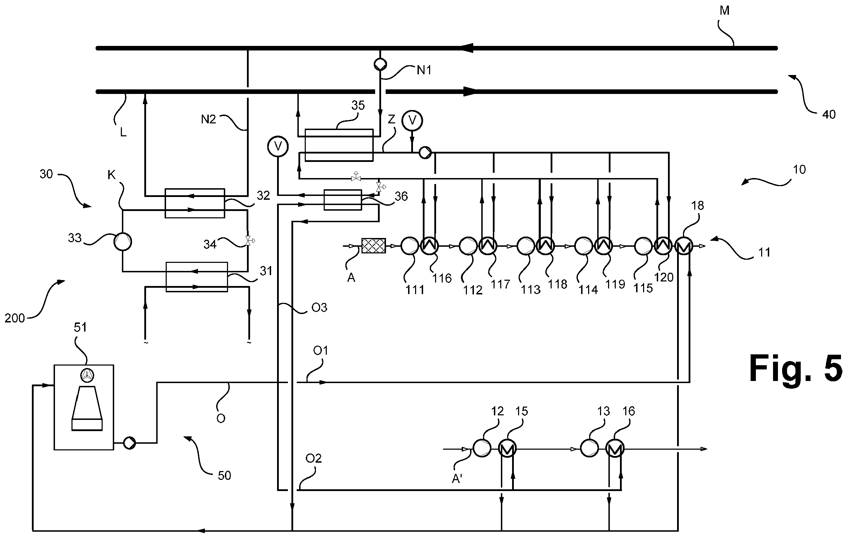

In einer in Figur 5 veranschaulichten alternativen Anordnung 200 wird ein Zwischenkreislauf Z eingesetzt, um die Wärmetauscher 116 bis 120 zu kühlen. In diesen Zwischenkreislauf sind Wärmetauscher 35 und 36 eingebunden. Die Kühler 15 und 16 sowie der weitere Nachkühler 18, der dem Hauptluftverdichter 11 insgesamt nachgeordnet ist, werden mittels zweier Teilströme O1 und O2 eines Kühlmittelstroms O, insbesondere von Kühlwasser, gekühlt. Auf diese Weise wird ein separater Kältemittelkreislauf 50 geschaffen. Ein weiterer Teilstrom O3 wird durch den Wärmetauscher 36 geführt. Dieser Wärmetauscher wird jedoch im üblichen Betrieb (mit Einspeisen voller Abwärmemenge vom Hauptluftverdichter ins Fernwärmenetz) nicht bzw. mit nur geringen Luft- und Wassermengen durchströmt. Nach erneuter Vereinigung der Teilströme O1 bis O3 werden diese in einem Rückkühlwerk 51, beispielsweise einem Kühlturm, abgekühlt. Die Wärmepumpenanordnung 30 (in üblicher Ausführung wie gezeigt oder auch in Ausführung gemäß Erfindung mit Zumischen des angewärmten Stromes zum Wasserstrom am Austritt des Wärmetauscher 35 bzw. vom Einspeisen ins Fernwärmenetz) ist hier optional.

## Patentansprüche

1. Anordnung (100) zum Rückgewinnen von Verdichtungswärme aus Luft, die in einer Luftbearbeitungsanlage (10) verdichtet und weiter bearbeitet wird, wobei die Anordnung die Luftbearbeitungsanlage (10) und ein Fernwärmenetz (40) umfasst, wobei die Luftbearbeitungsanlage (10) einen Hauptluftverdichter (11) mit mehreren Verdichterstufen (111-115) und einen oder mehrere weitere Verdichter (12, 13) aufweist, wobei den Verdichterstufen (111-115) des Hauptluftverdichters (11) und dem oder den weiteren Verdichtern (12, 13) jeweils Kühler (116-120; 15, 16) nachgeordnet sind, und wobei die Anordnung dafür eingerichtet ist, unter Verwendung eines ersten Anteils der Kühler (116-120) Rücklaufwasser aus dem Fernwärmenetz (40) in Form eines oder mehrerer erster Rücklaufwasserteilströme direkt oder über einen oder mehrere zwischengeschaltete Kältekreisläufe und ohne Verwendung einer zwischengeschalteten Wärmepumpe (30) zu erwärmen, **dadurch gekennzeichnet, dass** die Anordnung (100) eine Wärmepumpe (30) mit einem oder mehreren ersten Wärmetauschern (31) und einem oder mehreren zweiten Wärmetauschern (32) aufweist, wobei der eine oder die mehreren ersten Wärmetauscher (31) in einen Kältemittelkreislauf eingebunden ist oder sind, in dem ein zweiter Anteil der Kühler (15, 16, 18) angeordnet ist, und wobei die Anordnung (100) dafür eingerichtet ist, unter Verwendung des einen oder der mehreren zweiten Wärmetauscher (32) weiteres Rücklaufwasser aus dem Fernwärmenetz (40) in Form eines oder mehrerer zweiter Rücklaufwasserteilströme zu erwärmen.

2. Anordnung (100) nach Anspruch 1, die dafür eingerichtet ist, den einen oder die mehreren ersten Rücklaufwasserteilströme unter Verwendung des ersten Anteils der Kühler (116-120) auf ein erstes Temperaturniveau zu erwärmen und den oder die zweiten Rücklaufwasserteilströme unter Verwendung des einen oder der mehreren zweiten Wärmetauscher (32) auf ein zweites Temperaturniveau unterhalb des ersten Temperaturniveaus zu erwärmen.

3. Anordnung (100) nach Anspruch 2, bei der das erste Temperaturniveau bei 80 bis 110 °C liegt, bei der das zweite Temperaturniveau bei 50 bis 80 °C liegt, und bei der das zweite Temperaturniveau 10 bis 50 K unterhalb des ersten liegt.

4. Anordnung (100) nach Anspruch 3, die dafür eingerichtet ist, den einen oder die mehreren ersten Rücklaufwasserteilströme und den einen oder die mehreren zweiten Rücklaufwasserteilströme zu Vorlaufwasser in dem Fernwärmenetz (40) zuzuspeisen.

5. Anordnung (100) nach Anspruch 4, die dafür eingerichtet ist, den einen oder die mehreren ersten Rücklaufwasserteilströme auf dem ersten Temperaturniveau und den einen oder die mehreren zweiten Rücklaufwasserteilströme auf dem zweiten Temperaturniveau zu einem Sammelstrom zu vereinigen und den Sammelstrom zumindest zu einem Teil dem Vorlaufwasser zuzuspeisen.

6. Anordnung (100) nach Anspruch 4, die dafür eingerichtet ist, den einen oder die mehreren ersten Rücklaufwasserteilströme auf dem ersten Temperaturniveau und den einen oder die mehreren zweiten Rücklaufwasserteilströme auf dem zweiten Temperaturniveau getrennt voneinander zumindest zu einem Teil dem Vorlaufwasser zuzuspeisen.

7. Anordnung (100) nach Anspruch 5 oder 6, die dafür eingerichtet ist, das Vorlaufwasser auf einem dritten Temperaturniveau bereitzustellen, das bei 70 bis 95 °C liegt und das sich um nicht mehr als 5 K von einem mittleren Temperaturniveau unterscheidet, welches sich aus einem Massenstrom des einen oder der mehreren ersten Rücklaufwasserteilströme auf dem ersten Temperaturniveau und einem Massenstrom des einen oder der mehreren zweiten Rücklaufwasserteilströme auf dem zweiten Temperaturniveau ergibt.

8. Anordnung (100) nach einem der vorstehenden Ansprüche, die dafür eingerichtet ist, weiteres Rücklaufwasser in Form eines oder mehrerer weiterer Rücklaufwasserteilströme bereitzustellen, ohne es unter Verwendung des ersten Anteils der Kühler (116-120) zu erwärmen und ohne es unter Verwendung des einen oder der mehreren zweiten Wärmetauscher (32) zu erwärmen.

9. Verfahren zum Rückgewinnen von Verdichtungswärme aus Luft, bei dem eine Anordnung (100) verwendet wird, die eine Luftbearbeitungsanlage (10) und ein Fernwärmenetz (40) umfasst, wobei die Luftbearbeitungsanlage (10) einen Hauptluftverdichter (11) mit mehreren Verdichterstufen (111-115) und einen oder mehrere weitere Verdichter (12, 13) aufweist und den Verdichterstufen (111-115) des Hauptluftverdichters (11) und dem oder den weiteren Verdichtern (12, 13) jeweils Kühler (116-120; 15, 16) nachgeordnet sind, wobei die Luft in der Luftbearbeitungsanlage (10) verdichtet und weiter bearbeitet wird und wobei unter Verwendung eines ersten Anteils der Kühler (116-120) Rücklaufwasser aus dem Fernwärmenetz (40) in Form eines oder mehrerer erster Rücklaufwasserteilströme direkt oder über einen oder mehrere zwischengeschaltete Kältekreisläufe und ohne Verwendung einer zwischengeschalteten Wärmepumpe (30) erwärmt wird oder werden, **dadurch gekennzeichnet, dass** eine Wärmepumpe (30) mit einem oder mehreren ersten Wärmetauschern (31) und einem oder mehreren zweiten Wärmetauschern (32) verwendet wird, wobei der eine oder die mehreren ersten Wärmetauscher (31) in einen Kältemittelkreislauf eingebunden ist oder sind, in dem ein zweiter Anteil der Kühler (15, 16, 18) angeordnet ist, und wobei unter Verwendung des einen oder der mehreren zweiten Wärmetauscher (32) weiteres Rücklaufwasser aus dem Fernwärmenetz (40) in Form eines oder mehrerer zweiter Rücklaufwasserteilströme erwärmt wird.

10. Verfahren nach Anspruch 9, bei dem eine Anordnung (100) nach einem der Ansprüche 2 bis 8 verwendet wird.
